# EUROPÄISCHE PATENTSCHRIFT

(11) **EP 1 902 901 B1**
(45) Veröffentlichungstag und Bekanntmachung des Hinweises auf die Patenterteilung: **17.03.2010**
(21) Anmeldenummer: 07024092.4
(22) Anmeldetag: 02.02.2007
(51) Int. Cl.: B60R 5/04

(54) **Kraftfahrzeuginnenraum mit einem Raumausschnitt**
Vehicle interior with a space section
Habitacle de véhicule automobile doté d'une section d'espace

(30) Priorität: 28.02.2006 DE 102006010114
(43) Veröffentlichungstag der Anmeldung: 26.03.2008
(62) Teilanmeldung aus: 07002278.5
(73) Patentinhaber: BOS GmbH & Co. KG, 73760 Ostfildern (DE)
(72) Erfinder: Krause, Beate, 73635 Rudersberg-Michelau (DE); Münchenberg, Mathias, 73765 Neuhausen (DE)
(74) Vertreter: Patentanwälte Ruff, Wilhelm, Beier, Dauster & Partner

(56) Entgegenhaltungen:
- EP-A- 1 526 039
- EP-A2- 1 177 948
- DE-A1- 10 348 890

## Beschreibung

Die Erfindung betrifft einen Kraftfahrzeuginnenraum mit einem Raumausschnitt, der durch ein flexibles Flächengebilde in einer ausgezogenen Schutzposition überdeckbar ist, wobei das Flächengebilde an seinem in Auszugrichtung vorderen Stirnendbereich mit einem formstabilen Auszugprofil versehen ist, das auf gegenüberliegenden Seiten in kraftfahrzeugseitigen Führungen längs der Führungen verschiebbar gelagert ist, und das in wenigstens einer Ausziehposition mittels wenigstens eines Blockierelementes sicherbar ist.

Ein derartiger Kraftfahrzeuginnenraum, der die Merkmale des Oberbegriffs des Anspruchs 1 aufweist, ist aus der DE 103 48 890 A1 und der EP 1 524 152 A bekannt. Der bekannte Kraftfahrzeuginnenraum weist eine Laderaumfunktionseinrichtung auf, die in Form einer Laderaumabdeckung ausgebildet ist. Etwa auf Höhe einer Fahrzeugbrüstung ist in einem Laderaum des Kraftfahrzeuginnenraums ein Kassettengehäuse angeordnet, das sich in Fahrzeugquerrichtung hinter einer Rückenlehnenanordnung einer Fondsitzbank erstreckt und laderaumseitig befestigt ist. In dem Kassettengehäuse ist eine Wickelwelle drehbar gelagert, auf der ein flexibles Flächengebilde auf- und abwickelbar gehalten ist. Das flexible Flächengebilde ist an seinem in Auszugrichtung vorderen Stirnendbereich mit einem formstabilen Auszugprofil versehen, das mit seinen gegenüberliegenden Seitenbereichen in laderaumseitigen Führungen geführt ist. Die laderaumseitigen Führungen erstrecken sich ebenfalls etwa auf Höhe einer Seitenbrüstung längs der gegenüberliegenden Seitenwandungen des Laderaumes und sind als Führungsschienen ausgebildet. Das Auszugprofil weist an seinen gegenüberliegenden Seitenbereichen zapfenartige Führungselemente auf, die in den Führungsschienen längsverlagerbar geführt sind.

Aufgabe der Erfindung ist es, einen Kraftfahrzeuginnenraum der eingangs genannten Art zu schaffen, der eine sichere und verschleißarme Führung des Auszugprofiles längs des entsprechenden Raumausschnittes ermöglicht.

Die der Erfindung zugrundeliegende Aufgabe wird durch einen Kraftfahrzeuginnenraum gelöst, der die Merkmale des Anspruchs 1 aufweist.

Gemäß der Erfindung ist das Blockierelement in einer vertieften Aussparung der Funktionsnut angeordnet, und dem Auszugprofil ist für jedes Blockierelement ein zwischen einer Freigabeposition und einer Blockierposition beweglich gelagertes Riegelelement zugeordnet, das in der Blockierposition das Blockierelement formschlüssig hintergreift. Durch die gegenüber der Führungsnut vertiefte Anordnung des Blockierelementes ist dieses weitgehend verdeckt und unsichtbar angeordnet. Die Blockierung des Auszugprofiles erfolgt beim Überfahren des Blockierelementes dadurch, dass ein entsprechendes, am Auszugprofil beweglich gelagertes Riegelelement in seine das Blockierelement hintergreifende Position überführt wird.

In weiterer Ausgestaltung der Erfindung sind die Riegelelemente beidseitig des Auszugprofiles durch ein gemeinsames Betätigungsglied synchron ansteuerbar. Dadurch kann mittels eines einzelnen Betätigungsgliedes eine gleichzeitige Bewegung beider Riegelelemente erreicht werden.

In weiterer Ausgestaltung der Erfindung sind die Blockierelemente in Bewegungsrichtung des Auszugprofiles gegen Federkraft begrenzt längsverlagerbar. Dadurch ist es vorteilhaft möglich, das flexible Flächengebilde in der ausgezogenen Schutzposition auf Zug zu belasten und so gestrafft zu halten.

In weiterer Ausgestaltung der Erfindung weist jedes Blockierelement an seiner der Führungsnut zugewandten Seite eine Blockiernase auf, und das zugehörige Riegelelement des Auszugprofiles ist schwenkbeweglich gelagert und mit einem hakenartigen Kopf versehen, der derart auf die Blockiernase abgestimmt ist, dass er in der Blockierposition die Blockiernase zumindest abschnittsweise umgreift. Vorzugsweise ist der hakenartige Kopf schwalbenschwanz- oder gabelartig gestaltet, so dass die Rastnase flankierend umschlossen werden kann. Die schwalbenschwanz- oder gabelartige Gestaltung ermöglicht zudem eine Zentrier-und Steuerfunktion, indem das Riegelelement an der entsprechenden Rastnase zentriert und demzufolge eingesteuert werden kann.

Alle Profilteile weisen somit jeweils eigenständige Funktionen auf, die sich in der Gesamtanordnung zueinander ergänzen, so dass sich insgesamt eine stabile und verwindungssteife Führung mit guten Laufeigenschaften für das Auszugprofil ergibt. Dadurch, dass die stegartig überhöhte Lauffläche sich auf der dem Flächengebilde zugewandten Frontseite der Führung befindet, ist die dahinterliegende Funktionsnut zumindest teilweise verdeckt angeordnet, so dass zum Flächengebilde hin und damit vom Kraftfahrzeuginnenraum aus sichtbar lediglich ein schmaler Schlitz erkennbar ist.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in perspektivischer Darstellung einen Ausschnitt eines Kraftfahrzeuginnenraumes eines Personenkraftwagens,
- Fig. 2: in schematischer Seitenansicht die Ausführungsform gemäß Fig. 1,
- Fig. 3: in vergrößerter, schematischer Querschnittdarstellung eine Führung für eine Laderaumabdeckung nach den Fig. 1 und 2,
- Fig. 4: in perspektivischer, teilweise ausgeschnittener Darstellung eine aus mehreren Profilteilen zusammengesetzte Führung ähnlich Fig. 4,
- Fig. 5: die Führung nach Fig. 4 in ausschnittsweiser Darstellung und in vergrößertem Maßstab,
- Fig. 6: in schematischer perspektivischer Darstellung einen Ausschnitt der Führung der Laderaumabdeckung in dem Kraftfahrzeuginnenraum nach den Fig. 1 und 2 und
- Fig. 7 bis 9: in schematischer, aufgeschnittener Seitendarstellung verschiedene Momentanpositionen der Laderaumabdeckung in der Führung kurz vor sowie nach Erreichen einer ausgezogenen Schutzposition.

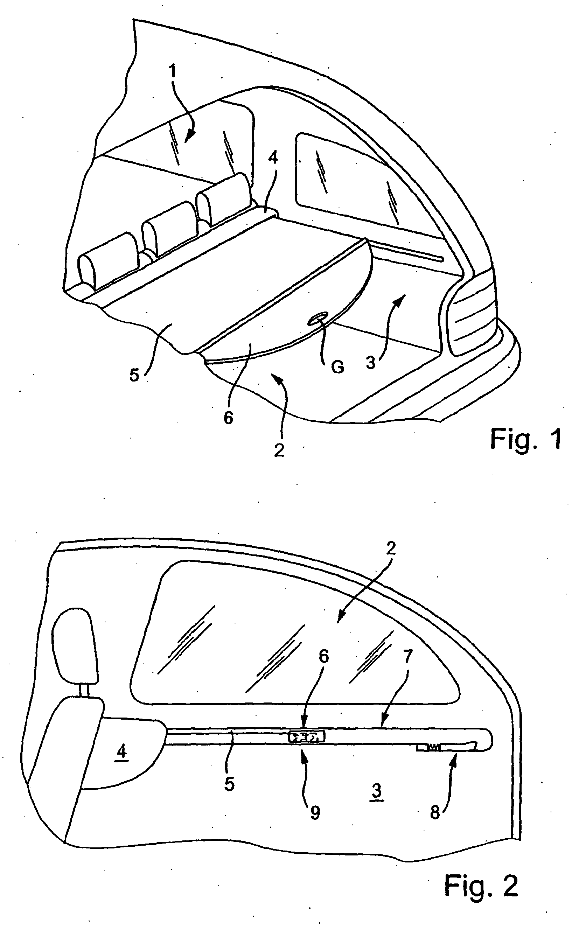

Ein Kraftfahrzeug nach den Fig. 1 und 2 stellt einen Personenkraftwagen dar, dessen Kraftfahrzeuginnenraum 1 in einen in einem vorderen Bereich vorgesehenen Fahrgastraum und in einen heckseitig vorgesehenen Laderaum 2 unterteilt ist. Der Laderaum 2 geht offen in den Fahrgastraum über. Der Laderaum 2 ist in normaler Fahrtrichtung gesehen nach vorne durch eine Rückenlehnenanordnung einer Fondsitzbank begrenzt. Auf gegenüberliegenden Seiten ist der Laderaum 2 durch zwei Seitenwandungen 3 begrenzt und nach hinten schließt der Laderaum 2 an einer nicht dargestellten Heckklappe ab.

Etwa auf Höhe einer Fahrzeugbrüstung ist hinter der Rückenlehnenanordnung der Fondsitzbank ein Kassettengehäuse 4 vorgesehen, das sich über die gesamte Breite des Laderaumes 2 in Fahrzeugquerrichtung erstreckt. In dem Kassettengehäuse 4 ist eine Wickelwelle drehbar gelagert, auf der ein flexibles Flächengebilde 5 auf- und abwickelbar gehalten ist. Das flexible Flächengebilde 5 dient beim dargestellten Ausführungsbeispiel zur etwa horizontalen Abdeckung des Laderaumes 2 und ist aus einem blickdichten, ein- oder mehrschichtigen Bahnmaterial hergestellt. Das Bahnmaterial weist vorzugsweise wenigstens eine Bahnschicht aus einem textilen Gewebe oder Gewirke auf, das aus Kunststoff- und/oder aus Textilfasern hergestellt ist.

Die Wickelwelle ist in Aufwickelrichtung durch eine Wickelfederanordnung belastet, so dass auf das Flächengebilde 5 in Aufwickelrichtung eine permanente Zugkraft ausgeübt wird. An einem in Auszugrichtung vorderen Stirnendbereich des Flächengebildes 5 ist ein formstabiles Auszugprofil 6 vorgesehen, das bei der Ausführungsform nach Fig. 1 mit einem Konturteil versehen ist, das auf die Innenkontur des Laderaumes im Heckbereich abgestimmt ist. Das Konturteil ist mit einem Griffelement G versehen, das ein Ergreifen des Auszugprofils 6 und damit des Flächengebildes 5 von Hand ermöglicht.

Das Auszugprofil 6 erstreckt sich über die gesamte Breite des Laderaumes 2 und ragt an seinen gegenüberliegenden Seitenbereichen durch Führungselemente 9 in Form von Führungsfortsätzen über einen jeweiligen Seitenrand des Flächengebildes 5 seitlich, d.h. quer zur Auszugrichtung des Flächengebildes 5 nach außen ab. Diese Führungselemente 9 sind auf jeder Fahrzeugseite in entsprechenden Führungen 7 der jeweiligen Seitenwandung 3 des Kraftfahrzeuginnenraumes längsverschiebbar geführt. Die Führungen 7 weisen eine Länge auf, die etwa dem Ausziehweg des Auszugprofils 6 zwischen einer aufgewickelten Ruheposition des Flächengebildes 5 und der ausgezogenen Schutzposition des Flächengebildes 5 entspricht, in der das Flächengebilde 5 mit seinem Auszugprofil 6 bis in den Heckbereich des Laderaumes 2 ausgezogen und dort festgelegt ist.

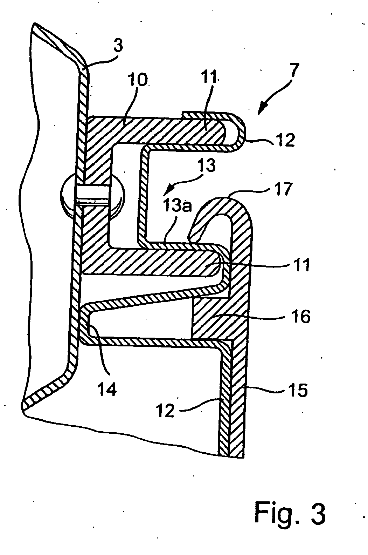

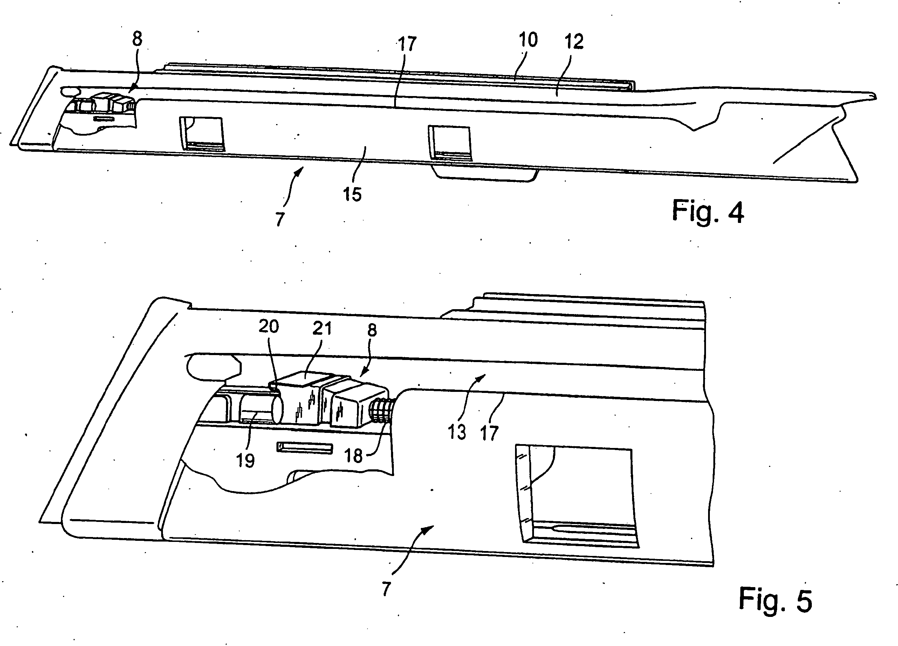

Jede Führung 7 ist als mehrteiliges Führungsprofil ausgeführt (Fig. 3 bis 5) und ist karosserieseitig an der jeweiligen Seitenwandung 3 befestigt. Vorzugsweise ist die jeweilige Führung 7 direkt an einem Seitenteil der Karosserietragstruktur der Seitenwandung 3 befestigt, um eine stabile und vorzugsweise crashsichere Anbindung der Führung 7 an der Fahrzeugkarosserie zu ermöglichen.

Wie anhand der Fig. 3 gut erkennbar ist, ist jede der beiden Führungen 7, die an den jeweils gegenüberliegenden Seitenwandungen 3 des Laderaumes 2 angebracht sind, dreiteilig aufgebaut. Der dreiteilige Aufbau wird durch drei Profilteile 15, 12, 10 gebildet, die sich jeweils einteilig durchgängig über die gesamte Führungslänge der Führung 7 für das Auszugprofil 9 erstrecken und quer zur Führungsrichtung für das Auszugprofil 9 miteinander verbunden sind. Ein erstes, zur Laderaummitte hin gewandtes Profilteil 15 dient als Führungsprofil und bildet den zur Laderaummitte hin gewandten frontseitigen Abschluss der Führung 7. Ein mittleres Profilteil 12 dient als Funktionsprofil und weist eine C-artig zur Laderaummitte hin offene Funktionsnut 13 auf, die sich über die gesamte Führungslänge des Auszugprofils 6 erstreckt. Das als Führungsprofil dienende erste Profilteil 15 weist in seinem oberen Bereich als Führungsfläche eine stegartig gestaltete Gleitprofilierung 17 auf, die die offene Funktionsnut 13 über deren gesamte Länge teilweise verdeckt. Die stegartige Gleitprofilierung 17 wird durch einen hakenartig zur Funktionsnut 13 nach außen gekrümmten Profilquerschnitt gebildet, dessen Breite wesentlich geringer ist als die Tiefe der Funktionsnut 13 - in horizontaler Richtung gesehen.

Alle Profilteile 10, 12, 15 sind vorzugsweise aus geeigneten Kunststoffmaterialien hergestellt. Es ist aber auch möglich, ein oder mehrere Profilteile aus anderen geeigneten Materialien herzustellen.

Das dritte, nach außen zur Karosserietragstruktur gerichtete Profilteil 10 ist als C-förmiges Versteifungsprofil ausgeführt und weist zwei Profilschenkel 11 auf, die die Funktionsnut 13 und damit den entsprechenden Profilabschnitt des Profilteiles 12 oben und unten flankieren. Durch dieses Versteifungsprofil ist es möglich, das als Funktionsprofil dienende Profilteil 12 relativ dünn auszuführen. Das als Versteifungsprofil dienende Profilteil 10 ist mittels entsprechender Befestigungselemente mit entsprechenden Tragstrukturabschnitten der Fahrzeugkarosserie fest verbunden. Zudem weist das mittlere Profilteil 12 einen durchgängigen Profilsteg unterhalb der Funktionsnut 13 auf, der sich ebenfalls an einem entsprechenden Tragstrukturabschnitt der Kraftfahrzeugkarosserie abstützt und mittels entsprechender Befestigungselemente mit diesem fest verbunden ist. Anstelle eines durchgängigen Stützsteges 14 können auch mehrere domartige Stützstege vorgesehen sein, die über die Länge der Führung 7 verteilt angeordnet sind. Das frontseitige Profilteil 15 ist mit einem Stegabschnitt 16 auf Höhe des Stützsteges 14 versehen, der in den V-förmig hohlprofilierten Stützsteg 14 hineinragt. Es ist möglich, auf Höhe des Stegabschnittes 16 und auf Höhe des Stützsteges 14 gemeinsame Befestigungsmittel vorzusehen, die beide Profilteile mit dem entsprechenden Tragstrukturabschnitt der Kraftfahrzeugkarosserie verbinden. Unterhalb der Gleitprofilierung 17 bildet die Frontseite des Profilteiles 15, die zur Laderaummitte hin gewandt ist, eine im Wesentlichen glattflächige, in montiertem Zustand vertikal ausgerichtete Verblendung. Diese kann räumlich und/oder optisch in eine Seitenverkleidung der Seitenwandung 3 integriert sein. Die einzelnen Profilteile, die schalenförmig in- oder aneinandergefügt sind, können durch mechanische Rastmittel oder auch durch stoffschlüssige Verbindungsmittel miteinander verbunden sein. Die mechanischen Rastmittel sind vorzugsweise einstückig an den entsprechenden Profilteilen angeformt.

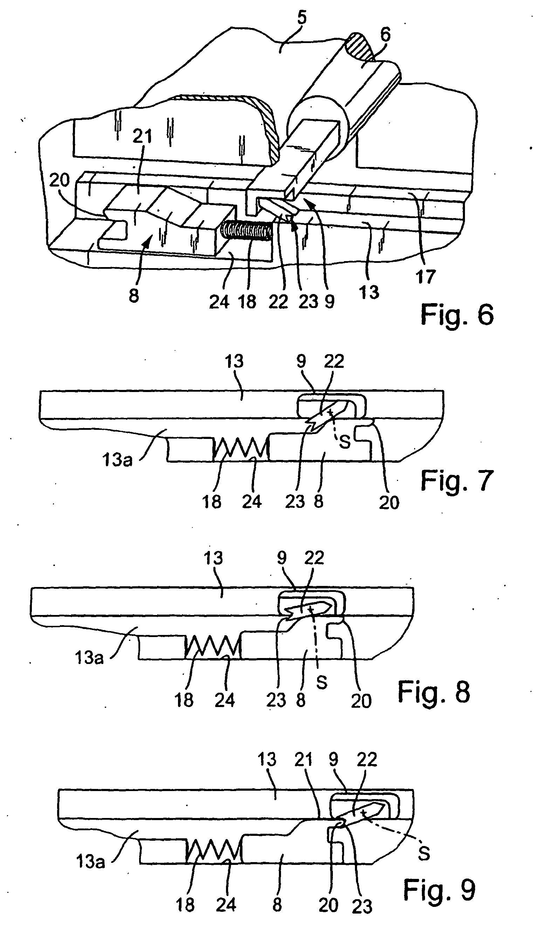

Der zwischen der Gleitprofilierung 17 und einer Oberkante der Funktionsnut 13 verbleibende Spalt ist derart auf die Höhe des jeweiligen Führungselementes 9 des Auszugprofils 6 abgestimmt, dass dieses mit geringem Spiel in dem Führungsschlitz längsbewegt werden kann. Das Führungselement 9 weist eine Breite auf, die es ihm ermöglicht, in nahezu die gesamte horizontale Tiefe der Funktionsnut 13 einzugreifen. Mittels eines nicht näher dargestellten Gleitabschnittes gleitet das Führungselement 9 auf der Gleitprofilierung 17. Seitlich versetzt zu dem Gleitabschnitt ist das Führungselement 9 mit einem Arretiermittel in Form eines Riegelelementes 22 versehen, das um eine Schwenkachse S begrenzt schwenkbeweglich an dem Führungselement 9 gelagert ist. Die Schwenkachse S erstreckt sich in Längsrichtung des Auszugprofils 6 und damit quer zur Längserstreckung des Flächengebildes 5. Das Führungselement 9 ist im Bereich des Riegelelementes 22 derart ausgespart, dass das Riegelelement 22 räumlich bündig in diese Aussparung eintauchen kann. Das Führungselement 9 weist, wie anhand der Fig. 6 bis 9 erkennbar ist, einen etwa rechteckigen Querschnitt auf. Das Riegelelement 22 ist quaderartig ausgeführt und weist an einem Stirnende eine keilförmige Spitze und an dem gegenüberliegenden Stirnende eine schwalbenschwanz- oder gabelartige Profilierung 23 auf. In unbelasteter Ruhestellung ragt das Riegelelement 22 gemäß Fig. 6 und 7 schräg nach unten, wobei sich seine keilförmige Spitze an einer entsprechenden Wandung der Aussparung des Führungselementes 9 abstützt. Die Breite des Riegelelementes 22 und die in der Ruheposition nach unten über das Führungselement 9 hinausragende Tiefe sind derart auf einen vertieften Nutabschnitt 13a der Funktionsnut 13 abgestimmt, dass das Riegelelement 22 in der schräg gerichteten Stellung in dem vertieften Nutabschnitt 13a vorzugsweise ohne gleitende Anlage entlangbewegt werden kann. In vorteilhafter Weise ragt das Riegelelement 22 in dieser unbelasteten und am Führungselement 9 abgestützten Ruhestellung berührungslos in den vertieften Nutabschnitt 13a hinein. Gleichzeitig liegt der Gleitabschnitt des Führungselements 9 während der gesamten Bewegung auf der Gleitprofilierung 17 des Profilteiles 15 auf.

Im Bereich des vertieften Nutabschnittes 13a ist auf Höhe einer ausgezogenen Schutzposition des Auszugprofils 6 und damit in einem heckseitigen Endbereich des Laderaumes 2 eine vertiefte Aussparung 24 vorgesehen, in der ein Blockierelement 8 angeordnet ist. Das Blockierelement 8 weist eine Breite auf, die vorteilhaft nicht größer ist als die Breite des vertieften Nutabschnittes 13a. Zudem ist das Blockierelement kürzer als die Länge der Aussparung 24 ausgeführt, so dass es begrenzt längsbeweglich in der Aussparung 24 gehalten ist. Das Blockierelement 8 ist durch eine Rückstellfederanordnung 18 in Auszugrichtung des Flächengebildes 5 und des Auszugprofils 6 druckbelastet, so dass es in unbelasteter Position permanent gegen einen in der Aussparung 24 vorgesehenen Anschlag 19 gedrückt gehalten ist. Das Blockierelement 8 ist demzufolge in Längsrichtung des vertieften Nutabschnittes begrenzt längsbeweglich gelagert, wobei das Blockierelement 8 parallel unterhalb des Nutabschnittes 13a angeordnet ist. Die Höhe des Blockierelementes 8 ist derart auf die Aussparung 24 abgestimmt, dass eine Oberkante des Blockierelementes 8 zumindest im Wesentlichen bündig mit der durch den Nutabschnitt 13a definierten Ebene abschließt. Das Blockierelement 8 weist an einem in Auszugrichtung des Flächengebildes gesehen oberen Vorderkantenbereich eine Blockiernase 20 auf, die etwa horizontal zum Fahrzeugheck hin abragt. Die Blockiernase 20 ist in ihrer Kontur derart auf die schwalbenschwanz- oder gabelartige Gestaltung des Riegelelementes 22 abgestimmt, dass der gabel- oder schwalbenschwanzartige Kopf 23 des Riegelelementes 22 die Rastnase 20 im Wesentlichen bündig umschließen kann. An die Rastnase 20 anschließend ist die Oberseite des Blockierelementes 8 mit einer Aufgleitfläche 21 versehen, an der das Riegelelement 22 sich aus seiner unbelasteten Ruhelage heraus aufrichten kann, sobald das Auszugprofil mit den entsprechenden Führungselementen 9 über das jeweilige Blockierelement 8 hinweggleitet. Das Riegelelement 22 ist in Richtung seiner unbelasteten Ruhelage federbelastet, so dass sich das Riegelelement 22 nach Überstreichen der Aufgleitfläche 21 automatisch wieder in seine schräggestellte Position zurückbewegt, sobald die Zwangsführung durch das Blockierelement 8 bzw. die Aufgleitfläche 21 aufgehoben ist. Die Rückholkraft der Wickelfederanordnung, die auf das Flächengebilde 5 wirkt, zieht anschließend zwangsläufig das Riegelelement gegen die Rastnase (Fig. 9), so dass eine formschlüssige Blockierung des Auszugprofils und der Führungselemente 9 in der ausgezogenen Schutzposition des Flächengebildes 5 erreicht wird.

Jedes der beiden Führungselemente 9 ist mit einem entsprechenden Riegelelement 22 versehen, die über ein Synchronisiermittel wie eine quer durch das Auszugprofil 6 verlaufende Übertragungsstange oder ähnliches bewegungsübertragend miteinander verbunden sind. Beide Riegelelemente sind gemeinsam schwenkbeweglich durch ein Betätigungselement im Bereich des Griffteiles G, so dass bei einer Betätigung des Betätigungselementes beide Riegelelemente gleichzeitig aus ihrer unbelasteten Ruhelage herausschwenkbar sind. Den Riegelelementen 22 kann eine gemeinsame Rückstellfeder zugeordnet sein, die beide Riegelelemente gleichzeitig und zu gleichen Beträgen belastet. In vorteilhafter Weise weisen die Riegelelemente 22 zudem eine gemeinsame Schwenkachse S auf, wobei das Übertragungsgestänge vorzugsweise als über die gesamte Länge des Auszugprofils durchgängige Welle gestaltet ist, an deren gegenüberliegenden Stirnenden die entsprechenden Riegelelemente angeordnet sind. Das Betätigungselement im Bereich des Griffteiles G kann dann vorzugsweise direkt an dieser Welle angreifen. In gleicher Weise kann auch die Rückstellfederanordnung direkt auf diese Welle wirken.

Die Druckfeder 18 in jeder Führung 7 ist in ihrer Federkraft so gewählt, dass sie größer als die Rückholkraft der Wickelfederanordnung, die auf das Flächengebilde wirkt, ist. Die Druckfeder 18, die jedes Blockierelement 8 in Richtung des Anschlags 19 gedrückt hält, dient somit ergänzend dazu, das Flächengebilde in der ausgezogenen Schutzposition gestrafft zu halten. Zudem dient die Längsbeweglichkeit des Blockierelementes 8 und die entsprechende Druckfeder 18 dazu, Längentoleranzen des Flächengebildes sowie Einbautoleranzen des Kassettengehäuses 4 und der Führungen auszugleichen.

## Patentansprüche

1. Kraftfahrzeuginnenraum mit einem Raumausschnitt, der durch ein flexibles Flächengebilde in einer ausgezogenen Schutzposition überdeckbar ist, wobei das Flächengebilde an seinem in Auszugrichtung vorderen Stirnendbereich mit einem formstabilen Auszugprofil versehen ist, das auf gegenüberliegenden Seiten in kraftfahrzeugseitigen Führungen längs der Führungen verschiebbar gelagert ist, und das in wenigstens einer Ausziehposition mittels wenigstens eines Blockierelementes sicherbar ist, **dadurch gekennzeichnet, dass** jede Führung (7) eine zu einer Fahrzeugmitte hin offene Führungsfläche (17) und parallel hinter der Führungsfläche (17) eine gegenüber der Führungsfläche vertiefte Funktionsnut (13, 13a) aufweist, der das wenigstens eine Blockierelement (8) zugeordnet ist, und dass das Blockierelement (8) in einer vertieften Aussparung (24) der Funktionsnut (13, 13a) angeordnet ist, und dass dem Auszugprofil (6) für jedes Blockierelement (8) ein zwischen einer Freigabeposition und einer Blockierposition am Auszugprofil (6) beweglich gelagertes Riegelelement (22) zugeordnet ist, das in der Blockierposition das Blockierelement (8) formschlüssig hintergreift.

2. Kraftfahrzeuginnenraum nach Anspruch 1, **dadurch gekennzeichnet, dass** die Riegelelemente (22) beidseitig des Auszugprofils (6) durch ein gemeinsames Betätigungsglied synchron ansteuerbar sind.

3. Kraftfahrzeuginnenraum nach einem der vorhergehenden Ansprüche, **dadurch gekennzeichnet, dass** die Blockierelemente (8) in Bewegungsrichtung des Auszugprofils (6) gegen Federkraft begrenzt längsverlagerbar sind. (6)

4. Kraftfahrzeuginnenraum nach einem der vorhergehenden Ansprüche, **dadurch gekennzeichnet, dass** jedes Blockierelement (8) an seiner der Funktionsnut (13, 13a) zugewandten Seite eine Blockiernase (20) aufweist, und dass das zugehörige Riegelelement (22) des Auszugprofils (6) schwenkbeweglich gelagert ist und mit einem hakenartigen Kopf (23) versehen ist, der derart auf die Blockiernase (20) abgestimmt ist, dass er in der Blockierposition die Blockiernase (20) zumindest abschnittsweise umgreift.

## Claims

1. Vehicle interior with a space section coverable by a flexible planar structure in an extended protective position, the planar structure being provided at its front end area at the front in the extension direction with a form-stable extension profile that is mounted movably along guides on opposite sides on the vehicle and that is securable in at least one extension position by at least one blocking element, **characterized in** each guide (7) has a guide surface (17) open towards a vehicle centre and a functional groove (13, 13a) parallel behind the guide surface (17), recessed relative thereto and assigned at least one blocking element (8), **in that** the blocking element (8) is arranged in a recessed cutout (24) of the functional groove (13, 13a) and **in that** a locking element (22) mounted movably between a release position and a blocking position on the extension profile (6) and gripping positively the rear of the blocking element (8) in the blocking position.

2. Vehicle interior according to Claim 1, **characterized in that** the locking elements (22) on both sides of the extension profile (6) are synchronously controllable by a common actuating element.

3. Vehicle interior according to one of the preceding claims, **characterized in that** the blocking elements (8) have limited longitudinal movability against a spring force in the movement direction of the extension profile (6).

4. Vehicle interior according to one of the preceding claims, **characterized in that** each blocking element (8) has on its side facing the functional groove (13, 13a) a blocking projection (20), and **in that** the associated locking element (22) of the extension profile (6) is mounted to permit swivel movement and provided with a hook-type head (23) matched to the blocking projection (20) such that it grips around the blocking projection (20) in at least some sections when in the blocking position.

## Revendications

1. Habitacle de véhicule automobile doté d'une section d'espace pouvant être recouverte par une structure plane souple dans une position de protection déroulée, sachant que la structure plane est munie à son extrémité avant dans le sens de déroulement d'un profilé de déroulement indéformable qui est logé dans des guides situés sur des côtés opposés du véhicule et de manière à pouvoir se déplacer le long des guides, et qui dans au moins une position déroulée peut être assuré par au moins un élément de blocage, **caractérisé en ce que** chaque guide (7) présente une surface de guidage (17) ouverte en direction d'un centre du véhicule et, parallèlement derrière la surface de guidage (17), une gorge fonctionnelle (13, 13a) en retrait par rapport à la surface de guidage et à laquelle est associé l'au moins un élément de blocage (8), et que l'élément de blocage (8) est disposé dans un évidement en retrait (24) de la gorge fonctionnelle (13, 13a), et qu'au profilé de déroulement (6) pour chaque élément de blocage (8) est associé un élément de verrouillage (22) logé de manière mobile sur le profilé de déroulement (6) entre une position de déblocage et une position de blocage, et qui, dans la position de blocage, s'engage en prise arrière dans l'élément de blocage (8) par complémentarité de forme.

2. Habitacle de véhicule automobile selon la revendication 1, **caractérisé en ce que** les éléments de verrouillage (22) peuvent être commandés de manière synchronisée des deux côtés du profilé de déroulement (6) par un organe d'actionnement commun.

3. Habitacle de véhicule automobile selon l'une des revendications précédentes, **caractérisé en ce que** les éléments de blocage (8) peuvent être déplacés longitudinalement dans le sens de déplacement du profilé de déroulement (6) de manière limitée en s'opposant à la force d'un ressort.

4. Habitacle de véhicule automobile selon l'une des revendications précédentes, **caractérisé en ce que** chaque élément de blocage (8) présente sur son côté orienté vers la gorge fonctionnelle (13, 13a) un talon de blocage (20), et que l'élément de verrouillage (22) associé du profilé de déroulements (6) est logé de manière pivotante et muni d'une tête crochue (23) adaptée au talon de blocage (20) de telle sorte que dans la position de blocage, elle entoure du moins en partie le talon de blocage (20).
